# EUROPÄISCHE PATENTSCHRIFT

(11) **EP 2 048 374 B1**
(45) Veröffentlichungstag und Bekanntmachung des Hinweises auf die Patenterteilung: **04.01.2012**
(21) Anmeldenummer: 08015425.5
(22) Anmeldetag: 01.09.2008
(51) Int. Cl.: F15B 15/19, B60R 21/34

(54) **Pyrotechnische Aktuatoreinheit**
Pyrotechnical actuator unit
Unité d'actionneur pyrotechnique

(30) Priorität: 11.10.2007 GB 0719844
(43) Veröffentlichungstag der Anmeldung: 15.04.2009
(73) Patentinhaber: Delphi Technologies, Inc., Troy, Michigan 48007 (US)
(72) Erfinder: Frank, Harald, 90766 Fürth (DE); Deutschmann, Claus-Werner, 90579 Langenzenn (DE)
(74) Vertreter: Müller, Karl-Ernst

(56) Entgegenhaltungen:
- EP-A- 1 808 606
- DE-A1-102006 011 927
- GB-A- 2 373 219
- US-A- 4 850 553

## Beschreibung

Die Erfindung betrifft eine Aktuatoreinheit, insbesondere zum Auslösen einer Sicherheitseinrichtung in einem Kraftfahrzeug, und eine Sicherheitseinrichtung mit einer solchen Aktuatoreinheit zum zumindest teilweisen Anheben der Fronthaube eines Kraftfahrzeuges im Falle einer Kollision.

Zur Erhöhung der Sicherheit bei Zusammenstößen, insbesondere mit Fußgängern oder Fahrradfahrern, umfassen Kraftfahrzeuge heutzutage oftmals Fronthauben, die im Falle eines Aufpralls schräg aufgestellt werden. Dabei wird durch entsprechende Mechanismen die Haube im Bereich der Frontscheibe angehoben, um die Verletzungsgefahr an Kopf und Oberkörper des Fußgängers oder Fahrradfahrers durch einen Aufprall auf der Windschutzscheibe zu verringern. Durch die angehobene Fronthaube wird eine zusätzliche Knautschzone gebildet, um den Aufprall besser abzufedern.

Bekannte Systeme weisen dazu Sensoren auf, die einen Zusammenstoß oder einen sich ankündigenden Zusammenstoß detektieren. Auf ein Signal eines solchen Sensors hin wird zum Beispiel ein pyrotechnisches Element aktiviert, das den hinteren Bereich der Fronthaube nach oben bewegt. Ein solches pyrotechnisches Element kann zum Beispiel ähnlich wie ein pyrotechnisches Element ausgestaltet sein, das zum Auslösen von Airbags verwendet wird.

Nach erfolgter Aktivierung des auf diese Weise gebildeten Sicherheitssystems bleibt die Fronthaube in der Regel in der schrägen, angehobenen Stellung, da sich der durch das pyrotechnische Element erzeugte erhöhte Gasdruck nur langsam aufgrund von Abkühlung oder Gasschlupf wieder abbaut. Eine Rückführung der Fronthaube in die ganz geschlossene Ausgangsstellung ist daher nicht oder nur sehr schwer möglich, so dass eine Weiterfahrt zum Beispiel zu einer Werkstatt nicht möglich oder stark erschwert ist.

DE 10 2006 011 927 A1 beschreibt eine Aktuatoreinheit mit einem in einer räumlichen Dimension größenveränderlichen Druckraum, der sich bei Erhöhung des Drucks in seinem Innern vergrößert, einem an dem Druckraum vorgesehenen und durch einen Teil des den Druckraum bildenden Hohlkörpers gebildeten Aktuator, der sich bei Vergrößerung des Druckraums nach außen bewegt, einem pyrotechnischen Element zum Druckaufbau in dem Druckraum und einem Ventil, das zum Abbau des erhöhten Drucks in dem Druckraum geöffnet werden kann.

EP 1 808 606 A2 und US 4,850,553 beschreiben jeweils eine Aktuatoreinheit mit einem in einer räumlichen Dimension größenveränderlichen, einen Druckraum bildenden Hohlkörper, der sich bei Erhöhung des Drucks in seinem Innern vergrößert. Ein Aktuator bewegt sich mit der Vergrößerung des Hohlraums nach außen. In dem Druckraum ist eine Druckerzeugungseinrichtung vorgesehen.

Eine Aktuatoreinheit mit den Merkmalen des Oberbegriffes des Anspruches 1 ist aus GB 2 373 219 A bekannt.

Aufgabe der vorliegenden Erfindung ist es, eine Aktuatoreinheit anzugeben, die unter anderem auf einfache und schnelle Weise ermöglicht, die Fronthaube des Kraftfahrzeuges nach der Auflösung des beschriebenen Sicherheitsmechanismus wieder zu schließen.

Diese Aufgabe wird mit einer Aktuatoreinheit mit den Merkmalen des Anspruches 1 gelöst. Unteransprüche sind auf bevorzugte Ausführungsformen gerichtet.

Anspruch 7 ist auf eine Sicherheitseinrichtung für die Fronthaube eines Kraftfahrzeuges mit einer erfindungsgemäßen Aktuatoreinheit gerichtet.

Eine erfindungsgemäße Aktuatoreinheit weist einen in wenigstens einer räumlichen Dimension größenveränderlichen, einen Druckraum bildenden Hohlkörper auf. Bei Erhöhung des Drucks im Inneren des Hohlkörpers vergrößert sich dieser in der wenigstens einen räumlichen Dimension. Ein Aktuator ist derart an dem Hohlkörper vorgesehen oder durch einen Teil des Hohlkörpers gebildet, dass sich der Aktuator bei einer Vergrößerung des Hohlkörpers nach außen bewegt. Erhöhung des Drucks in dem Hohlkörper bewegt den Aktuator also zum Beispiel zur Auslösung einer mechanischen Funktion. In dem durch den Hohlkörper gebildeten Druckraum ist eine Druckerzeugungseinrichtung zur Erhöhung des Drucks vorgesehen. Wenigstens ein Ventil kann zum Abbau des erhöhten Drucks in dem Druckraum geöffnet werden.

Eine erfindungsgemäße Aktuatoreinheit lässt sich insbesondere zum Auslösen einer Sicherheitseinrichtung in einem Kraftfahrzeug einsetzen. Besonders vorteilhaft ist ein solcher Aktuator einsetzbar, um im Falle eines Aufpralles die Fronthaube eines Kraftfahrzeuges an der Seite der Windschutzscheibe in eine schräge Stellung anzuheben.

Eine erfindungsgemäße Aktuatoreinheit ermöglicht es mit dem wenigstens einen Ventil, den erhöhten Druck in dem Druckraum wieder abzubauen, der durch die Druckerzeugungseinrichtung zum Beispiel in Antwort auf ein Signal eines Sensors aufgebaut wurde, der auf einen Aufprall oder einen drohenden Aufprall reagiert. Die Aktuatoreinheit kann dementsprechend nach Abbau erhöhten Drucks ohne wesentliche Krafteinwirkung wieder in ihre ursprüngliche Lage zurückversetzt werden. Wird die Aktuatoreinheit zum Beispiel zum Anheben einer Fronthaube eines Kraftfahrzeuges im Falle eines Fußgängeraufpralles verwendet, so kann die Fronthaube nach Abbau erhöhten Drucks leicht wieder in ihre GeschlossenStellung überführt werden.

Der Sensor kann zum Beispiel ein Kontaktsensor, einen Ultraschallsensor, einen Sensor unter Einsatz elektromagnetischer Strahlung, eine piezoelektrische Sensoreinheit oder ähnliches umfassen.

Vorzugsweise ist das Ventil derart ausgestaltet, dass es automatisch mit einem zeitlichen Versatz nach der Druckerhöhung in dem Druckraum öffnet. Auf diese Weise findet die Entlüftung des Systems nicht unmittelbar bei Erreichen eines Maximaldrucks im Inneren statt, sondern geschieht mit einer zeitlichen Verzögerung, so dass zum Beispiel bei der beschriebenen Sicherheitsanwendung zum Anheben der windschutzscheibennahen Seite der Fronthaube eines Kraftfahrzeuges sicher gestellt ist, dass die Fronthaube einen ausreichend langen Zeitraum schräg aufgestellt bleibt.

Bei der erfindungsgemäßen Aktuatoreinheit ist vorgesehen, dass das wenigstens eine Ventil eine Druckraumöffnung in dem Druckraum und ein verformbares Element umfasst, das derart angeordnet und verformbar ist, dass es in einem Geschlossen-Zustand die wenigstens eine Druckraumöffnung verschließt und in einem Offen-Zustand die wenigstens eine Druckraumöffnung zum Abbau des erhöhten Drucks im Druckraum freigibt. Besonders einfach ist es dabei, wenn das verformbare Element selbst wenigstens eine Elementöffnung aufweist, die im Geschlossen-Zustand durch Kontakt des verformbaren Elementes mit einer Kontaktfläche verschlossen ist und bei einer Verformung des verformbaren Elementes der Kontakt mit der Kontaktfläche zumindest teilweise aufgehoben wird, so dass die wenigstens eine Elementöffnung offen ist, um eine Verbindung der wenigstens einen Elementöffnung und der wenigstens einen Druckraumöffnung herzustellen.

Der Druckaufbau in dem Druckraum wird erfindungsgemäß auf besonders einfache Weise mit einem pyrotechnischen Element als Druckerzeugungseinrichtung erreicht. Auf ein Signal eines einen Zusammenstoß oder einen drohenden Zusammenstoß detektierenden Sensors hin zündet ein pyrotechnisches Element in an sich bekannter Weise eine pyrotechnische Ladung, um Gas zu erzeugen. Das durch die Zündung heiße Gas bewegt den Aktuator nach außen. Das Ventil umfasst ein temperatursensitives Element, insbesondere ein Thermobimetallelement, das auf die hohe Temperatur des Gases beziehungsweise auf die Verbrennungswärme der pyrotechnischen Ladung reagiert, um zu öffnen.

Die Verformung des verformbaren Elementes wird durch eine Temperaturänderung ausgelöst. Die kostengünstige erfindungsgemäße Ausgestaltung des auf Temperaturänderung reagierenden verformbaren Elementes umfasst dazu ein Thermobimetallelement. Solche Thermobimetallelemente umfassen zum Beispiel zwei untrennbar miteinander verbundene Metallkomponenten, die unterschiedliche Wärmeausdehnungskoeffizienten aufweisen und sich deswegen bei einer Temperaturänderung verformen

Die Verwendung eines pyrotechnischen Elementes ermöglicht dabei also auf einfache Weise eine Doppelfunktion des Druckaufbaus einerseits und der Auslösung eines als Ventil dienenden temperatursensitiven Elementes andererseits.

Der Aktuator kann zum Beispiel das Ende einer Teleskopstange umfassen, die an einer Seite eines Gehäuses vorgesehen ist und die aufgrund des Druckaufbaus in dem Gehäuse durch die Druckerzeugungseinrichtung ausfährt. Bei einer bevorzugten Ausgestaltung umfasst der Hohlkörper ein Gehäuse und einen in dem Gehäuse bewegbaren Kolben, wobei der Aktuator mit dem Kolben verbunden ist und durch eine Gehäuseöffnung des Gehäuses ragt. Eine solche Ausgestaltung ist einfach und robust.

Die Kolbenstange kann einen mit dem Gehäuse in Verbindung stehenden Hohlraum umfassen, so dass das Innere der Kolbenstange ein Teil des Druckraumes ist.

Das Ventil kann grundsätzlich an jeder Stelle in dem Druckraum angeordnet sein und ermöglicht so große Flexibilität bei der Anpassung an äußere räumliche Gegebenheiten.

Umfasst der Aktuator einen mit dem Gehäuse in Verbindung stehenden Hohlraum, zum Beispiel den Innenraum einer Kolbenstange, so befindet sich das Ventil vorteilhafterweise an dessen gehäusefernen Ende.

Insbesondere bei einer erfindungsgemäßen Ausführungsform, bei der das verformbare Element auf eine Temperaturerhöhung reagiert und der erhöhte Druck in dem Gehäuse mit einem pyrotechnischen Element erzeugt wird, lässt sich so auf einfache Weise ein zeitlicher Versatz bewirken, mit dem das verformbare Element auf die durch die Zündung der pyrotechnischen Ladung ausgelöste Temperaturerhöhung in dem Gehäuse reagiert.

Der erhöhte Druck wird mit einem pyrotechnischen Element erzeugt, so dass sich durch den Abstand des Ventils von dem pyrotechnischen Element der zeitliche Versatz einstellen lässt, mit dem das Ventil nach Betätigung des pyrotechnischen Elementes öffnet, da es bei größerem Abstand länger dauert, bis sich die durch das pyrotechnische Element hervorgerufene Temperaturerhöhung an dem Ventil bemerkbar macht.

Die Erfindung wird anhand von in den Figuren dargestellten erfindungsgemäßen Ausführungsformen beispielhaft im Detail erläutert. Dabei zeigen
- Fig. 1: eine erfindungsgemäße Aktuatoreinheit im seitlichen Querschnitt,
- Fig. 2: ein Detail der Ausführungsform der Fig. 1 in einem perspektivisch gezeigten seitlichen Querschnitt,
- Fig. 3: dasselbe Detail in einem anderen Betriebszustand, und
- Fig. 4: ein Detail einer abgewandelten Ausführungsform.

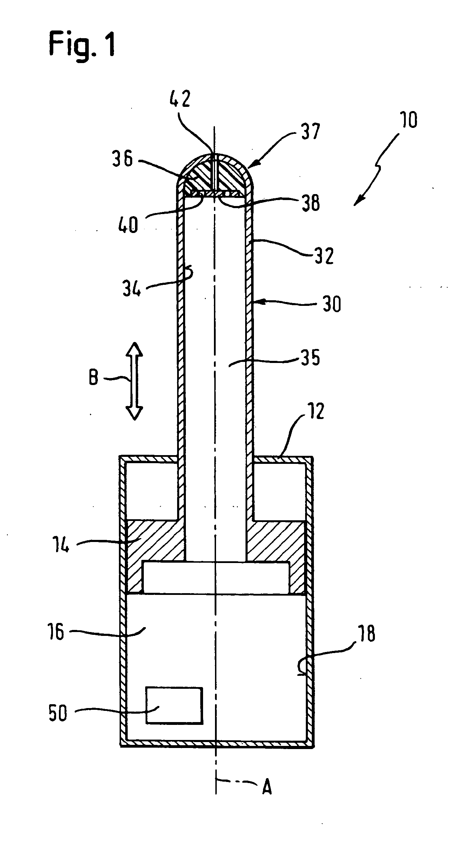

Fig. 1 zeigt eine Aktuatoreinheit 10 mit einem Gehäuse 12, in dem ein Kolben 14 in Richtung des Pfeils B linear beweglich angeordnet ist. Der Kolben 14 liegt dicht - gegebenenfalls mit einer entsprechenden Dichtung - an der Innenwand 18 des Gehäuses 12 an. Der Kolben 14 ist mit einer Kolbenstange 30 verbunden, dessen Wand 32 einen Hohlraum 35 umschließt. Das Gehäuse 12, der Kolben 14 und die Kolbenstange 30 definieren einen Druckraum 16. Die Innenwand der Kolbenstange ist mit Bezugsziffer 34 bezeichnet. Am Ende der Kolbenstange 30 ist ein Ventil 37 vorgesehen. Es umfasst eine Aufnahme 36, in die ein Thermobimetallelement 38 eingelegt ist, das weiter unten näher erläutert werden wird.

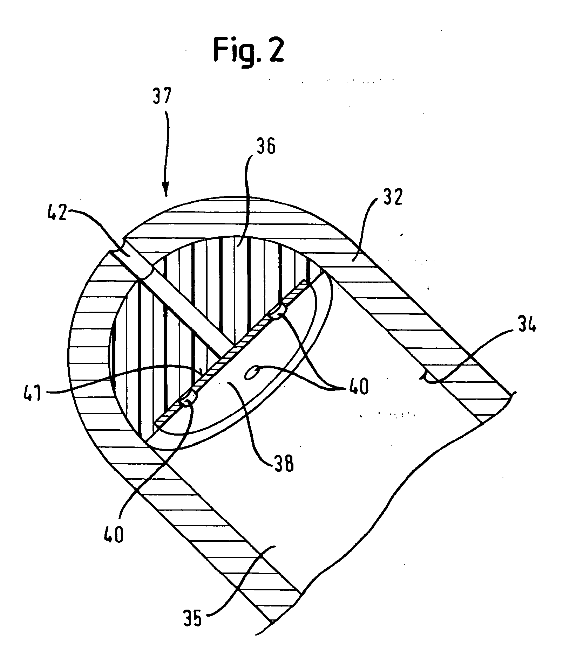

Das Thermobimetallelement 38 umfasst vier Elementöffnungen 40, von denen in Fig. 1 und 2 zwei im Schnitt sichtbar sind. Die Aufnahme 36 ist am gehäusefernen Ende der Kolbenstange 30 in diese eingefügt und besteht zum Beispiel aus einem Kunststoffspritzteil. In die Aufnahme 36 kann das Thermobimetallelement 38 eingerastet oder eingespritzt vorgesehen sein. Durch die Aufnahme 36 und die Außenwand 32 der Kolbenstange 30 erstreckt sich die Druckraumöffnung 42. Die gezeigte Anordnung ist im Wesentlichen rotationssymmetrisch um die Achse A.

In dem Druckraum 16 befindet sich ein pyrotechnisches Element 50, das in nicht gezeigter Weise mit einem an sich bekannten Stoßsensor verbunden ist, der im Falle eines stoßartigen Ereignisses ein Signal an das pyrotechnische Element 50 gibt, um dieses zu aktivieren.

Die Aktuatoreinheit ist an der windschutznahen Seite unter einer Fronthaube eines Kraftfahrzeuges angeordnet, um diese auf der windschutzscheibennahen Seite anzuheben, wenn es zum Beispiel zu einem Zusammenprall mit einem Fußgänger kommt.

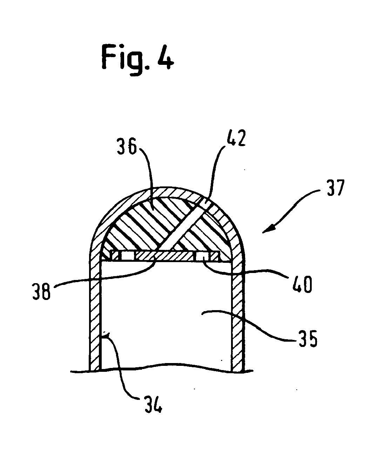

Die gehäuseferne Seite der Kolbenstange 30 liegt dazu an der Unterseite der windschutzscheibennahen Seite der Fronthaube an. Durch geeignete Maßnahmen, wie zum Beispiel entsprechende Ausnahmen, schräge Angriffsflächen oder ähnliches ist sicher gestellt, dass die Druckraumöffnung 42 nicht durch die aufliegende Fronthaube versperrt wird. Andere Ausführungsformen sehen die Druckraumöffnung 42 nicht zentral vor, wie in der in Fig. 1 bis 3 gezeigten Ausführungsform, sondern zum Beispiel schräg aus dem gehäusefernen Teil der Kolbenstange heraus weisend, wie es in Fig. 4 angedeutet ist. In Fig. 4 sind gleiche oder gleich wirkende Elemente mit gleichen Bezugsziffern bezeichnet wie bei der Ausführungsform der Fig. 1 bis 3.

Die erfindungsgemäße Aktuatoreinheit wird wie folgt eingesetzt.

Detektiert der nicht gezeigte Stoßsensor in dem Kraftfahrzeug einen Stoß, zum Beispiel durch einen Zusammenprall mit einem Fußgänger, wird ein Signal an das pyrotechnische Element 50 gegeben, das daraufhin in an sich bekannter Weise eine pyrotechnische Ladung zündet. Das dabei erzeugte Gas treibt den Kolben 14 parallel zur gezeigten Doppelpfeilrichtung B in dem Gehäuse 12 nach außen. Die Kolbenstange 30 bewegt auf diese Weise zum Beispiel den windschutzscheibennahen Teil einer Fronthaube nach oben.

Nach einer gewissen Zeit nach Auslösen des pyrotechnischen Elementes 50 hat sich die Verbrennungswärme der pyrotechnischen Ladung in dem Druckraum 16 bis zu dem Thermobimetallelement 38 fortgepflanzt. Durch Auswahl des Fluids in dem Hohlraum und/oder der Länge der Kolbenstange 30 kann dieser zeitliche Versatz vorbestimmt werden.

In Fig. 1 und 2 ist ein Geschlossen-Zustand gezeigt. Das Thermobimetallelement 38 liegt flach an einer Anlagefläche der Aufnahme 36 an. Die Öffnungen 40 in dem Thermobimetallelement 38 und die Druckraumöffnung 42 haben dementsprechend keine Verbindung.

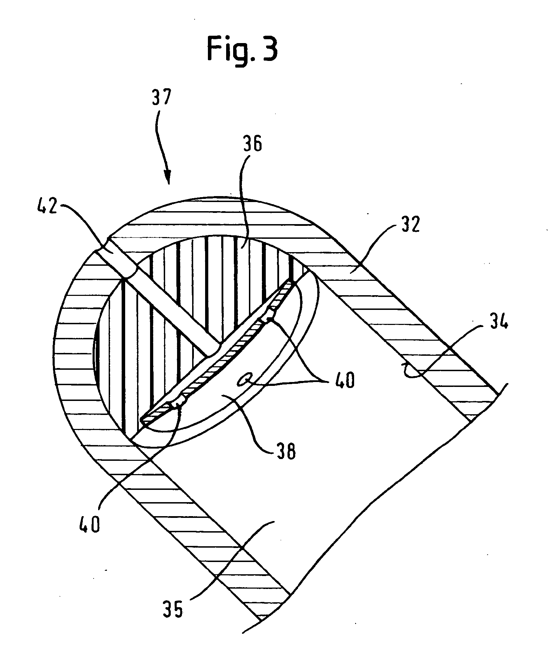

Wenn sich die Wärme, die durch das pyrotechnische Element 50 erzeugt wird, bis zu dem Thermobimetallelement 38 fortgepflanzt hat, verformt sich das Thermobimetallelement 38 und hebt zumindest teilweise von der Kontaktfläche 41 der Aufnahme 36 ab. Wie es in Fig. 3 erkennbar ist, entsteht auf diese Weise eine Verbindung zwischen der Druckraumöffnung 42 und den Elementöffnungen 40 in dem Thermobimetallelement 38. Gas aus dem Druckraum 16 und dem Innenraum 35 der Kolbenstange 30 kann durch diese Verbindung nach außen strömen, so dass sich der Druck in dem Druckraum 16 und dem Innenraum 35 der Kolbenstange 30 abbaut. Der Kolben 14 bewegt sich wieder nach unten und die Kolbenstange 30 wird in das Gehäuse 12 zurückgezogen.

Eine durch die Aktuatoreinheit 10 schräg angehobene Fronthaube eines Kraftfahrzeuges lässt sich also wieder in die Ursprungsstellung zurück bewegen.

### Bezugszeichenliste

- 10: Aktuatoreinheit
- 12: Gehäuse
- 14: Kolben
- 16: Druckraum
- 18: Innenwand des Gehäuses
- 30: Kolbenstange
- 32: Kolbenstangenwand
- 34: Innenwand der Kolbenstange
- 35: Kolbenstangeninnenraum
- 36: Aufnahme
- 37: Ventil
- 38: Thermobimetallelement
- 40: Elementöffnung in dem Thermobimetallelement
- 41: Kontaktfläche
- 42: Druckraumöffnung
- 50: pyrotechnisches Element

## Patentansprüche

1. Aktuatoreinheit (10), insbesondere zum Auslösen einer Sicherheitseinrichtung in einem Kraftfahrzeug, mit
- einem in wenigstens einer räumlichen Dimension größenveränderlichen, einen Druckraum (16) bildenden Hohlkörper (12, 30), der sich bei Erhöhung des Drucks in seinem Inneren in der wenigstens einen räumlichen Dimension vergrößert,
- einem an dem Hohlkörper vorgesehen oder durch einen Teil des Hohlkörpers (12, 30) gebildeten Aktuator (30), der derart angeordnet ist, dass er sich bei einer Vergrößerung des Hohlkörpers nach außen bewegt,
- einer Druckerzeugungseinrichtung (50) zum Druckaufbau in dem Druckraum (16), wobei die Druckerzeugungseinrichtung wenigstens ein pyrotechnisches Element (50) umfasst,
- wenigstens einem Ventil (37), das zum Abbau des erhöhten Drucks in dem Druckraum (16) geöffnet werden kann, wobei das wenigstens eine Ventil (37) wenigstens eine Druckraumöffnung (42) in dem Druckraum (16) und ein verformbares Element (38) umfasst, das derart angeordnet und verformbar ist, dass es in einem Geschlossenzustand die wenigstens eine Druckraumöffnung (42) verschließt und in einem Offenzustand die wenigstens eine Druckraumöffnung (42) zum Abbau erhöhten Drucks im Druckraum (16) freigibt,
**dadurch gekennzeichnet, dass** das verformbare Element ein Thermobimetallelement (38) umfasst, und die Verformung des verformbaren Elementes (38) durch Temperaturänderung, vorzugsweise durch Temperaturerhöhung, auslösbar ist.

2. Aktuatoreinheit nach Anspruch 1, **dadurch gekennzeichnet, dass** das wenigstens eine Ventil (37) derart ausgestaltet ist, mit einem zeitlichen Versatz nach dem Druckaufbau in dem Druckraum (16) automatisch zu öffnen.

3. Aktuatoreinheit nach einem der Ansprüche 1 oder 2, **dadurch gekennzeichnet, dass** das verformbare Element (38) wenigstens eine Elementöffnung (40) aufweist, die im Geschlossenzustand durch Kontakt des verformbaren Elementes (38) mit einer Kontaktfläche (41) verschlossen ist, und der Kontakt mit der Kontaktfläche (41) bei einer Verformung des verformbaren Elementes (38) zumindest teilweise aufgehoben wird, so dass die wenigstens eine Elementöffnung (40) offen ist, um eine Verbindung der wenigstens einen Elementöffnung (40) und der wenigstens einen Druckraumöffnung (42) herzustellen.

4. Aktuatoreinheit nach einem der Ansprüche 1 bis 3, **dadurch gekennzeichnet, dass** der Hohlkörper ein Gehäuse (12) und einen in dem Gehäuse bewegbaren Kolben (14) umfasst, wobei der Aktuator (30) mit dem Kolben (14) verbunden ist und durch eine Gehäuseöffnung des Gehäuses (12) ragt.

5. Aktuatoreinheit nach Anspruch 4, **dadurch gekennzeichnet, dass** der Aktuator eine Kolbenstange (30) umfasst, die einen mit dem Gehäuse (12) in Verbindung stehenden Hohlraum (35) umfasst.

6. Aktuatoreinheit nach einem der Ansprüche 4 oder 5, **dadurch gekennzeichnet, dass** das wenigstens eine Ventil (37) im Bereich des gehäusefernen Endes des Aktuators (30) vorgesehen ist.

7. Sicherheitseinrichtung für die Fronthaube eines Kraftfahrzeuges, mit
- einer Aktuatoreinheit (10) nach einem der Ansprüche 1 bis 6, die derart angeordnet ist, dass der Aktuator (30) bei Erhöhung des Drucks in dem Druckraum (16) die Fronthaube, bevorzugt an der windschutzscheibennahen Seite, wenigstens teilweise anhebt,
- einer Steuereinheit zur Erzeugung und Abgabe eines Druckerzeugungssignals an die Druckerzeugungseinrichtung (50) zur Erhöhung des Drucks in dem Druckraum (16) bei einem durch einen Aufprall auf das Kraftfahrzeug erzeugten Stoß oder bei einem drohenden Aufprall.

## Claims

1. An actuator unit (10), in particular for triggering a safety device in a vehicle, comprising
- a hollow body (12, 30) formed in a pressure chamber (16), which hollow body can be dimensionally changed in at least one spatial dimension and is enlarged in the at least one spatial dimension during increase of pressure inside the body,
- an actuator (30) provided on the hollow body or formed by a part of the hollow body (12, 30) and arranged such that it is moved outward during enlargement of the hollow body,
- a compression device (50) for generating pressure in the pressure chamber (16), the compression device comprising at_least one pyrotechnical element (50),
- at least one valve (37) that can be opened for reducing the increased pressure in the pressure chamber (16), the at least one valve (37) comprising at least one pressure chamber opening (42) in the pressure chamber (16) and one deformable element (38) disposed and deformable such that in a closed state it closes the at least one pressure chamber opening (42) and in an opened state releases the at least one pressure chamber opening (42) for reducing increased pressure in the pressure chamber (16),
**characterized in that** the deformable element comprises a thermostatic bimetallic element (38) and the deformation of the deformable element (38) can be triggered by a change of temperature, preferably an increase in temperature.

2. The actuator unit according to claim 1, **characterized in that** the at least one valve (37) is formed such as to open automatically with a time offset after the pressure generation in the pressure chamber (16).

3. The actuator unit according to any one of claims 1 or 2, **characterized in that** the deformable element (38) has at least one element opening (40) which in a closed state is closed by the contact of the deformable element (38) with a contact surface (41), and the contact with the contact surface (41) is at least partially released upon a deformation of the deformable element (38) such that the at least one element opening (40) is open to establish a connection between the at least one element opening (40) and the at least one pressure chamber opening (42).

4. The actuator unit according to any one of claims 1 to 3, **characterized in that** the hollow body comprises a housing (12) and a piston (14) movable in said housing wherein the actuator (30) is connected to the piston (14) and protrudes through a housing opening of the housing (12).

5. The actuator unit according to claim 4, **characterized in that** the actuator comprises a piston rod (30) that comprises a cavity (35) in contact with the housing (12).

6. The actuator unit according to any one of claims 4 or 5, **characterized in that** the at least one valve (37) is provided in the area of the end away from the housing of the actuator (30).

7. A safety device for the hood of a vehicle, comprising
- an actuator unit (10) according to any one of claims 1 to 6, which is disposed such that the actuator (30) at least partially lifts the hood, preferably on the side near of the windscreen, when the pressure in the pressure chamber (16) is increased,
- a control unit for generating and outputting a pressure generation signal to the compression device (50) for increasing the pressure in the pressure chamber (16) upon a shock caused by an impact to the vehicle or in case of an imminent impact.

## Revendications

1. Unité d'actionneur (10), en particulier pour déclencher un dispositif de sécurité dans un véhicule automobile, avec
- un corps creux (12, 30) de taille variable dans au moins une dimension spatiale, formant une chambre de pression (16) et s'agrandissant dans l'au moins une dimension spatiale lors de l'augmentation de la pression à l'intérieur de celui-ci,
- un actionneur (30) prévu au niveau du corps creux ou formé par une partie du corps creux (12, 30) et qui est disposé de telle sorte qu'il se déplace vers l'extérieur lors d'un agrandissement du corps creux,
- un dispositif de génération de pression (50) pour la montée en pression dans la chambre de pression (16), le dispositif de génération de pression comprenant au moins un élément pyrotechnique (50),
- au moins une valve (37) qui peut être ouverte pour réduire la pression accrue dans la chambre de pression (16), l'au moins une valve (37) comportant au moins une ouverture de chambre de pression (42) dans la chambre de pression (16) et un élément déformable (38) qui est agencé et déformable de telle sorte qu'il obture dans un état fermé l'au moins une ouverture de chambre de pression (42) et libère dans un état ouvert l'au moins une ouverture de chambre de pression (42) pour réduire la pression accrue dans la chambre de pression (16),
**caractérisée en ce que** l'élément déformable comprend un bilame thermique (38) et la déformation de l'élément déformable (38) peut être déclenchée par un changement de température, de préférence par une augmentation de la température.

2. Unité d'actionneur selon la revendication 1, **caractérisée en ce que** l'au moins une valve (37) est réalisée de sorte à s'ouvrir automatiquement avec un décalage temporel après la montée en pression dans la chambre de pression (16).

3. Unité d'actionneur selon l'une quelconque des revendications 1 ou 2, **caractérisée en ce que** l'élément déformable (38) présente au moins une ouverture d'élément (40), qui est obturée dans l'état fermé par contact de l'élément déformable (38) avec une surface de contact (41), et le contact avec la surface de contact (41) est supprimé au moins en partie lors d'une déformation de l'élément déformable (38) si bien que l'au moins une ouverture d'élément (40) est ouverte pour établir une liaison de l'au moins une ouverture d'élément (40) et de l'au moins une ouverture de chambre de pression (42).

4. Unité d'actionneur selon l'une quelconque des revendications 1 à 3, **caractérisée en ce que** le corps creux comporte un carter (12) et un piston (14) mobile dans le carter, l'actionneur (30) étant relié au piston (14) et dépassant à travers une ouverture du carter (12).

5. Unité d'actionneur selon la revendication 4, **caractérisée en ce que** l'actionneur comporte une tige de piston (30) qui comprend une chambre creuse (35) communiquant avec le carter (12).

6. Unité d'actionneur selon l'une quelconque des revendications 4 ou 5, **caractérisée en ce que** l'au moins une valve (37) est prévue dans la zone de l'extrémité de l'actionneur (30) éloignée du carter.

7. Dispositif de sécurité pour le capot avant d'un véhicule automobile, avec
- une unité d'actionneur (10) selon l'une quelconque des revendications 1 à 6 qui est disposée de telle sorte que l'actionneur (30) soulève le capot avant au moins en partie, de préférence du côté proche du pare-brise, lors de l'augmentation de la pression dans la chambre de pression (16),
- une unité de commande permettant de générer et d'émettre un signal de génération de pression au dispositif de génération de pression (50) pour augmenter la pression dans la chambre de pression (16) lors d'un choc produit par une collision sur le véhicule automobile ou lors d'une collision imminente.
